# FASCICULE DE BREVET EUROPEEN

(11) **EP 1 152 925 B1**
(45) Date de publication et mention de la délivrance du brevet: **25.09.2002**
(21) Numéro de dépôt: 00902706.1
(22) Date de dépôt: 04.02.2000
(51) Int. Cl.: B60R 19/24, B60R 19/04

(54) **PARE-CHOCS POUR VEHICULE AUTOMOBILE**
STOSSFÄNGER FÜR EIN KRAFTFAHRZEUG
BUMPER FOR MOTOR VEHICLE

(30) Priorité: 19.02.1999 FR 9902062
(43) Date de publication de la demande: 14.11.2001
(73) Titulaire: Renault s.a.s., 92100 Boulogne Billancourt (FR)
(72) Inventeur: POURRIAS, Jean, Yves, F-92160 Antony (FR); SAILLARD, Patrick, F-94100 Saint Maur des Fosses (FR); TARENBERQUE, Eric, F-91570 Bièvres (FR)
(86) Numéro de dépôt international: FR0000264
(87) Numéro de publication internationale: WO00048866

(56) Documents cités:
- EP-A- 0 041 413
- EP-A- 0 779 183
- DE-A- 3 402 456
- DE-A- 4 034 394
- FR-A- 2 366 960
- US-A- 5 029 920
- PATENT ABSTRACTS OF JAPAN vol. 1997, no. 07, 31 juillet 1997 (1997-07-31) & JP 09 079228 A (NIPPON PLAST CO LTD), 25 mars 1997 (1997-03-25)

## Description

La présente invention se rapporte à un pare-chocs pour véhicule automobile et plus particulièrement à un pare-chocs en matière plastique divisé en plusieurs parties, permettant un montage et un démontage rapide de chacune des parties indépendamment les unes des autres, et conservant un bon aspect esthétique.

Classiquement, les pare-chocs de véhicule automobile en matière plastique sont divisés en trois parties, la division du pare-chocs ayant principalement pour but de faciliter le moulage du pare-chocs et de permettre la réalisation d'un pare-chocs de forme complexe à moindre coût. Un tel pare-choc est connu du document EP 779 183 A par exemple. Les différentes parties du pare-chocs sont alors assemblées entre elles au moyen d'agrafes de fixation, ces dernières étant disposées du coté de la peau intérieur du pare-chocs, afin de ne pas détériorer l'aspect extérieur du pare-chocs.

Un inconvénient de ce type de montage réside dans le fait que, une fois le pare-chocs monté sur le véhicule, les agrafes de fixations des différentes parties sont inaccessibles et le changement d'une seule des parties du pare-chocs, par exemple suite à un accrochage, nécessite la dépose du pare-chocs dans son ensemble. Par ailleurs, les pare-chocs étant le plus souvent fixés sur la structure du véhicule au moyen de pattes de fixation disposées sur la peau intérieure du pare-chocs et donc peu accessible, le montage et démontage du pare-chocs nécessite généralement un matériel spécialisé, soulevant le véhicule par exemple, pour améliorer l'accessibilité aux vis de fixation. Une solution connue pour remédier à cet inconvénient consiste à fixer le pare-chocs sur le véhicule au moyen de vis apparentes sur la peau extérieure du pare-chocs, toutefois une telle solution dégrade l'aspect extérieur du pare-chocs et nuit à l'impression de qualité dégagée par le véhicule.

Le but de la présente invention est donc de proposer un pare-chocs de véhicule automobile divisé en plusieurs parties, dont les différentes parties se montent et se démontent facilement sur la structure du véhicule, indépendamment les unes des autres, et qui présente un excellent aspect visuel extérieur, tout en étant simple et économique à réaliser.

L'invention a pour objet un pare-chocs en matière plastique pour véhicule automobile divisé en plusieurs parties et fixé à la structure du véhicule au moyen d'éléments de fixation.

Selon l'invention, le pare-chocs est caractérisé en ce que ses différentes parties sont obtenues par moulage et comportent des cavités destinées à recevoir les éléments de fixation, ces dernières débouchant sur la face extérieure du pare-chocs et étant obturées par un cache amovible venant masquer la cavité.

Selon une caractéristique du pare-chocs selon l'invention, le cache est articulé par un film charnière en bordure de la cavité, le cache et le film charnière étant obtenus directement de moulage avec le pare-chocs.

Selon une autre caractéristique du pare-chocs, les cavités sont réalisées sur le bord supérieur du pare-chocs, à proximité des bords réalisant la jonction avec les autres parties du pare-chocs.

Selon une autre caractéristique du pare-chocs objet de l'invention, les éléments de fixation sont des vis réalisant à la fois la liaison des différentes parties entre elles et la fixation du pare-chocs sur la structure du véhicule, la tête des vis de fixation étant insérée dans la cavité et masquée par le cache.

Selon encore une autre caractéristique du pare-chocs objet de l'invention, les parties du pare-chocs s'étendant latéralement au véhicule viennent recouvrir l'aile du véhicule autour du passage de roue pour former un élargisseur d'aile.

Selon encore une autre caractéristique du pare-chocs objet de l'invention, l'élargisseur d'aile comporte, sur sa peau intérieur, des clips de fixations coopérant avec des logements adapté de l'aile pour maintenir l'élargisseur d'aile intégré au pare-chocs contre l'aile.

Selon encore une autre caractéristique du pare-chocs objet de l'invention, la matière plastique du pare-chocs est un polymère thermoplastique et notamment du polypropylène.

0n comprendra mieux les buts, aspects et avantages de la présente invention, d'après la description donnée ci-après d'un mode de réalisation de l'invention, présenté à titre d'exemple non limitatif, en se référant aux dessins annexés, dans lesquels :
- la figure 1 est une vue en perspective d'une face avant de véhicule automobile muni d'un pare-chocs de véhicule automobile selon un mode de réalisation de l'invention ;
- la figure 2 est une vue en perspective du pare-chocs de la figure 1 ;
- la figure 3 est une vue de détail du pare-chocs au niveau des cavités réceptrices des éléments de fixation lorsque le cache obturateur est ouvert ;
- la figure 4 est une vue similaire à la figure 2 lorsque le cache est en position fermée.

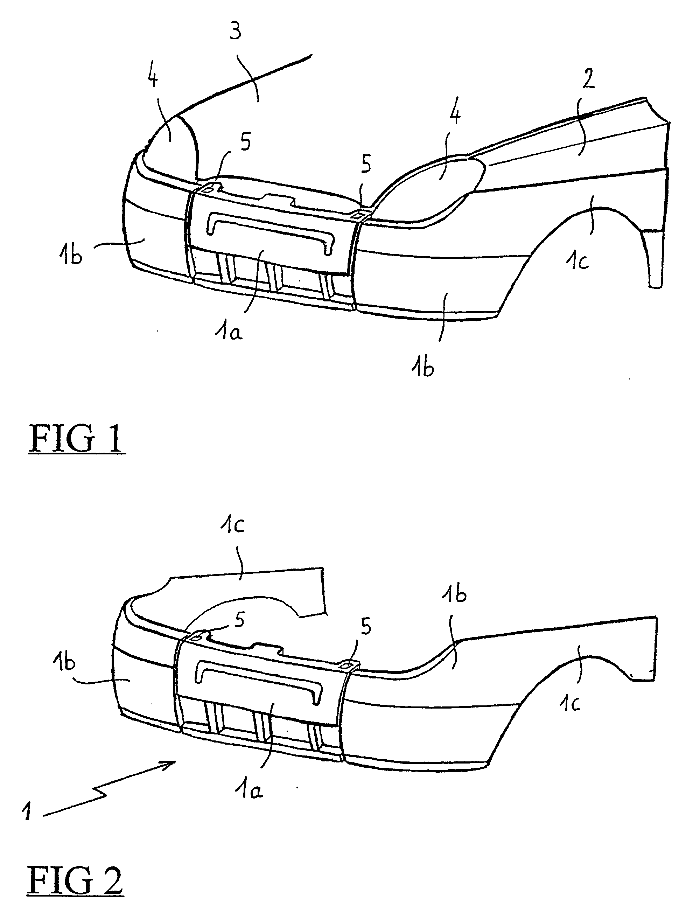

La figure 1 représente une face avant de véhicule automobile comportant un pare-chocs 1 en matière plastique divisé en trois parties, des ailes latérales 2, un capot 3 et des phares 4. Conformément aux figures 1 et 2, le pare-chocs 1 comporte une partie centrale la s'étendant entre les deux phares 4 et deux parties latérales 1b s'étendant transversalement au véhicule de part et d'autre de la partie centrale 1b, et se prolongeant sur le côté du véhicule en venant recouvrir partiellement les ailes 2 avant.

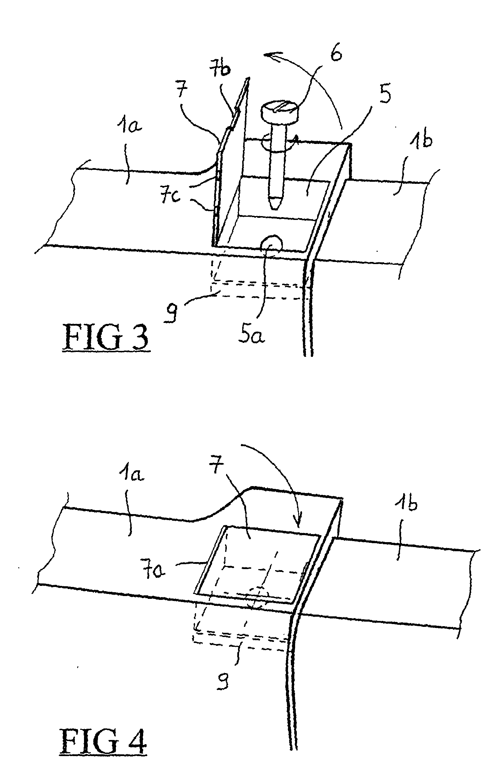

Le bord supérieur de la partie centrale la du pare chocs 1 comporte, à chacune de ses extrémités latérales, une cavité 5 destinée à recevoir une vis de fixation 6 du pare-chocs 1. La cavité 5, représentée plus précisément sur les figures 3 et 4, est de forme rectangulaire et comporte une face inférieure présentant un alésage 5a permettant le passage de la vis de fixation 6. L'un des bords supérieur de la cavité 5 est relié à un cache 7 articulé au pare-chocs 1 au moyen d'un film charnière 7a, le cache 7 étant destiné à masquer la cavité 5 en position fermée. Avantageusement, le cache 7, le film charnière 7a, et la cavité 5 sont en polymère thermoplastique, notamment du polypropylène, et obtenus directement de moulage avec le pare-chocs, le film charnière 7a réalisant la liaison entre le cache 7 et le bord supérieur de la cavité étant obtenu par un amincissement local de la matière plastique.

Conformément à la figure 3, le cache 7 présente des bords munis de bossages 7c venant coopérer avec des alvéoles, non représentées sur la figure, disposées sur les parois de la cavité 5 pour maintenir le cache 7 en position fermée. L'extrémité du cache 7 est munie d'une encoche 7b permettant l'insertion d'un objet, tel qu'une tête de tournevis, pour soulever le cache 7 et accéder à la cavité 5.

Les deux parties latérales 1b du pare-chocs 1 sont reliées à la structure du véhicule au moyen de pattes de liaisons 9 s'étendant en direction de la partie centrale la du pare-chocs 1 et s'introduisant sous la cavité 5 de la partie centrale la du pare-chocs 1. Les pattes 9 sont munies d'un alésage venant en regard de l'alésage 5a de la cavité 5 et permettant le passage d'une vis de fixation 6 afin que le serrage de cette dernière contre la structure du véhicule réalise à la fois l'immobilisation de la partie centrale la et des parties latérales 1b du pare-chocs 1.

Avantageusement, les parties latérales 1b du pare-chocs 1 s'étendent sur l'aile 2, au niveau du passage de roue, pour former un élargisseur d'aile 1c, ce dernier étant fixé sur l'aile 2 au moyen de clips de fixation, non représentés sur les figures, intégrés à la peau intérieur de l'élargisseur d'aile 1c et s'insérant dans des logements adaptés de la face extérieure de l'aile 2.

Le montage d'un tel pare-chocs 1 sur le véhicule s'effectue simplement en amenant la partie centrale 1a et les deux parties latérales 1b du pare-chocs 1 contre la structure avant du véhicule, les caches 7, disposés sur la face extérieure du pare-chocs 1, étant alors ouvert pour donner accès au cavités 5.

Le pare-chocs 1 est ensuite immobilisé en serrant les vis de fixations 6 et en clipsant les élargisseur d'aile 1c sur les ailes 2. Une fois cette opération terminée, les caches 7 sont rabattus sur les cavités 5 de manière à masquer les vis de fixations 6 du pare-chocs 1.

Un tel pare-chocs présente l'avantage d'offrir un excellent aspect extérieur et de procurer une grande facilité de montage et de démontage de chacune des parties 1a et 1b du pare-chocs 1 en offrant une très bonne accessibilité aux moyens de fixation 6. Par ailleurs, les cavités 5 et les caches 7 étant obtenus directement lors du moulage du pare-chocs 1 en matière plastique, le coût de fabrication d'un tel pare-chocs reste faible.

Bien entendu, l'invention n'est nullement limitée au mode de réalisation décrit et illustré qui n'a été donné qu'à titre d'exemple. Ainsi, l'exemple illustre un pare-chocs avant de véhicule automobile, mais l'invention est également applicable pour les pare-chocs arrière.

## Revendications

1. Pare-chocs (1) en matière plastique pour véhicule automobile divisé en plusieurs parties (1a,1b), ledit pare-chocs (1) étant fixé à la structure du véhicule au moyen d'éléments de fixation (6), **caractérisé en ce que** les différentes parties (1a,1b) du pare-chocs (1) sont obtenues par moulage et comportent des cavités (5) destinées à recevoir lesdits éléments de fixation (6), lesdites cavités (5) débouchant sur la face extérieure du pare-chocs et étant masquées par un cache (7) amovible.

2. Pare-chocs (1) selon la revendication 1, **caractérisé en ce que** ledit cache est articulé par un film charnière (7a) en bordure de la cavité (5), ledit cache (7) et ledit film charnière (5) étant obtenus directement de moulage avec le pare-chocs (1).

3. Pare-chocs (1) selon l'une quelconque des revendications 1 à 2, **caractérisé en ce que** lesdites cavités (5) sont réalisées sur le bord supérieur du pare-chocs (1) à proximité des bords réalisant la jonction avec les autres parties du pare-chocs (1).

4. Pare-chocs (1) selon l'une quelconque des revendications 1 à 3, **caractérisé en ce que** lesdits éléments de fixation sont des vis (6) réalisant à la fois la liaison des différentes parties entre elles et la fixation du pare-chocs (1) sur la structure du véhicule, la tête desdites vis de fixation (6) étant insérée dans la cavité (5) et masquée par ledit cache (7).

5. Pare-chocs (1) selon l'une quelconque des revendications 1 à 4, les parties (1b) du pare-chocs (1) s'étendant latéralement au véhicule viennent recouvrir l'aile (2) du véhicule autour du passage de roue pour former un élargisseur d'aile (1c).

6. Pare-chocs selon la revendication 5, **caractérisé en ce que** ledit élargisseur d'aile (1c) comporte sur sa peau intérieur des clips de fixations coopérant avec des logements adapté de l'aile pour maintenir l'élargisseur d'aile (1c) contre l'aile (2).

7. Pare-chocs (1) selon l'une quelconque des revendications 1 à 5, **caractérisé en ce que** la matière plastique du pare-chocs (1) est un polymère thermoplastique et notamment du polypropylène.

## Patentansprüche

1. Stossstange (1) aus Kunststoff für ein Kraftfahrzeug, die in mehrere Abschnitte (1a, 1b) unterteilt ist, wobei die Stossstange (1) am Rahmen des Fahrzeugs mittels Befestigungsteilen (6) befestigt ist, **dadurch gekennzeichnet, dass** die verschiedenen Abschnitte (1a, 1b) der Stossstange (1) durch einen Giessvorgang erhalten werden und Vertiefungen (5) aufweisen zur Aufnahme der Befestigungsteile (6), wobei die Vertiefungen (5) auf der Aussenseite der Stossstange münden und durch eine bewegliche Klappe (7) verschliessbar sind.

2. Stossstange (1) nach Anspruch 1, **dadurch gekennzeichnet, dass** die Klappe mittels eines Filmscharniers. (7a) am Rand der Vertiefung (5) angelenkt ist, wobei die Klappe (7) und das Filmscharnier (7a) zusammen mit der Stossstange (1) gemeinsam in einem Giessvorgang hergestellt werden.

3. Stossstange (1) nach einem der Ansprüche 1 bis 2, **dadurch gekennzeichnet, dass** die Vertiefungen (5) im oberen Rand der Stossstange (1) ausgebildet sind in der Nähe derjenigen Ränder, die der Verbindung mit den anderen Abschnitten der Stossstange (1) dienen.

4. Stossstange (1) nach einem der Ansprüche 1 bis 3, **dadurch gekennzeichnet, dass** die Befestigungsteile Schrauben (6) sind, die zum einen der Verbindung der verschiedenen Abschnitte miteinander und zum anderen der Befestigung der Stossstange (1) am Rahmen des Fahrzeugs dienen, wobei der Kopf der Befestigungsschrauben (6) in die Vertiefung (5) eingesetzt ist und von der Klappe (7) verdeckt wird.

5. Stossstange nach einem der Ansprüche 1 bis 4, bei der die Abschnitte (1b) der Stossstange (1), die sich seitlich entlang des Fahrzeugs erstrecken, den Kotflügel (2) des Fahrzeugs entlang der Radaussparung bedecken um so eine Kotflügelverbreiterung (1c) zu bilden.

6. Stosstange nach Anspruch 5, **dadurch gekennzeichnet, dass** die Kotflügelverbreiterung (1c) auf ihrer Innenseite Befestigungsklammern aufweist, die mit daran angepassten Aussparungen im Kotflügel zusammen wirken um die Kotflügelverbreiterung (1c) in Anlage an den Kotflügel (2) zu halten.

7. Stossstange (1) nach einem der Ansprüche 1 bis 5, **dadurch gekennzeichnet, dass** der Kunststoff für die Stossstange (1) ein thermoplastisches Polymer und insbesondere ein Polypropylän ist.

## Claims

1. A bumper (1) of plastic material for an automobile vehicle divided into a plurality of parts (1a, 1b), the bumper (1) being secured to the vehicle bodywork by means of fastening members (6), **characterised in that** the various parts (1a, 1b) of the bumper (1) are obtained by moulding and comprise cavities (5) adapted to receive the fastening members (6), these cavities (5) communicating with the external surface of the bumper and being concealed by a detachable mask (7).

2. A bumper (1) as claimed in claim 1, **characterised in that** the mask is articulated by means of a hinge film (7a) on the edge of the cavity (5), the mask (7) and the hinge film (5) being obtained directly by moulding with the bumper (1).

3. A bumper (1) as claimed in any one of claims 1 to 2, **characterised in that** the cavities (5) are formed on the upper edge of the bumper (1) in the vicinity of the edges forming the junction with the other parts of the bumper (1).

4. A bumper (1) as claimed in any one of claims 1 to 3, **characterised in that** the fastening members are screws (6) providing for both the connection of the different parts and the fastening of the bumper (1) to the vehicle bodywork, the head of these fastening screws (6) being inserted in the cavity (5) and concealed by the mask (7).

5. A bumper (1) as claimed in any one of claims 1 to 4, in which the parts (1b) of the bumper (1) extending laterally to the vehicle cover the wing (2) of the vehicle about the wheel housing in order to form a wing expander (1c).

6. A bumper (1) as claimed in claim 5, **characterised in that** the wing expander (1c) comprises, on its inner skin, fastening clips cooperating with adapted housings of the wing in order to retain the wing expander (1c) against the wing (2).

7. A bumper (1) as claimed in any one of claims 1 to 5, **characterised in that** the plastic material of the bumper (1) is a thermoplastic polymer and in particular polypropylene.
